# EUROPÄISCHE PATENTSCHRIFT

(11) **EP 0 543 828 B1**
(45) Veröffentlichungstag und Bekanntmachung des Hinweises auf die Patenterteilung: **16.04.1997**
(21) Anmeldenummer: 91912927.0
(22) Anmeldetag: 25.07.1991
(51) Int. Cl.: G01K 7/18

(54) **TEMPERATURFÜHLER UND VERFAHREN ZUR HERSTELLUNG VON TEMPERATURFÜHLERELEMENTEN**
TEMPERATURE SENSOR AND PROCESS FOR PRODUCING TEMPERATURE-SENSOR ELEMENTS
CAPTEUR DE TEMPERATURE ET PROCEDE POUR LA FABRICATION D'ELEMENTS DE CAPTEURS DE TEMPERATURE

(30) Priorität: 14.08.1990 DE 4025715
(43) Veröffentlichungstag der Anmeldung: 02.06.1993
(73) Patentinhaber: ROBERT BOSCH GMBH, 70442 Stuttgart (DE)
(72) Erfinder: FRIESE, Karl-Hermann, D-7250 Leonberg (DE); NEUMANN, Harald, D-7143 Vaihingen/Enz (DE)
(86) Internationale Anmeldenummer: DE9100601
(87) Internationale Veröffentlichungsnummer: WO9203711

(56) Entgegenhaltungen:
- WO-A-89/03033
- DE-A- 3 829 764

## Beschreibung

### Stand der Technik

Die Erfindung betrifft einen Temperaturfühler, insbesondere einen PTC-Temperaturfühler, nach der Gattung des Hauptanspruchs sowie Verfahren zur Herstellung eines Temperaturfühlers.

Es ist allgemein bekannt, zur Messung von vergleichsweise hohen Temperaturen, wie sie beispielsweise in Abgasen von Verbrennungsmotoren vorherrschen, Temperaturfühler mit Temperaturfühlerelementen mit temperaturbeständigen Widerstandsmaterialien mit temperaturabhängigem Widerstandswert zu verwenden (vgl. E.D. Macklen, "Thermistors", Verlag Electrochemical Publications, Ltd., 1979).

PTC-Temperaturfühler nutzen die stetige Widerstandsänderung von Metallen oder Halbleitern mit positivem Temperaturkoeffizienten bei sich ändernden Temperaturen. Die in PTC-Temperaturfühlern bevorzugt verwendeten Metalle sind aufgrund ihrer hohen Stabilität und Reproduzierbarkeit Platin und Nickel sowie deren Legierungen.

Aus der DE-A-38 29 764 ist ein Temperaturfühler bekannt, der aus mehreren übereinander geschichteten Keramikplättchen besteht, die zu einem Laminatverbund zusammenlaminiert sind, wobei auf den jeweiligen Oberflächen der einzelnen Keramikplättchen jeweils Widerstandsbahnen aufgedruckt sind, welche untereinander über in die Keramikplättchen eingebrachte Durchkontaktierlöcher miteinander elektrisch verbunden sind. Die Keramikplättchen übernehmen gleichzeitig die elektrische Isolation der Widerstandsbahnen in den Schichtebenen.

Es ist ferner bekannt, zum Beispiel aus EP-A-0 188 900 und EP-A 0 142 993 sowie DE-A-30 17 947 und DE-A-35 43 599, zur Bestimmung des Lambda-Wertes von Gasgemischen planare Abgassensoren zu verwenden, die sich in besonders kostengünstiger Weise in Keramikfolien- und Siebdrucktechnik herstellen lassen.

Aus der DE-C-37 33 192 (WO-A-89 03033) ist es bekannt, die Alterungsbeständigkeit und die Ansprechzeiten von PTC-Temperaturfühlern dadurch zu verbessern, daß die PTC-Temperaturfühlerelemente hermetisch gegenüber dem Meßgas und der Umgebungsluft eingekapselt werden.

Nachteilig an den bekannten PTC-Temperaturfühlerelementen ist es, daß sie eine gewisse flächenhafte Ausdehnung aufweisen und daher nicht an allen Punkten derselben Abgastemperatur ausgesetzt sind.

### Vorteile der Erfindung

Der erfindungsgemäße Temperaturfühler mit den kennzeichnenden Merkmalen des Hauptanspruchs hat demgegenüber den Vorteil, daß durch eine Stapel-Anordnung ausreichend hohe Meßwiderstandswerte erreichbar sind, bei gleichzeitig geringer flächenhafter Ausdehnung und somit weitgehender Unabhängigkeit vom Temperaturgradienten im Abgas.

Durch die in den Unteransprüchen aufgeführten Maßnahmen sind vorteilhafte Weiterbildungen und Verbesserungen des im Hauptanspruch angegebenen Temperaturfühlerelementes möglich. Besonders vorteilhaft ist es, die Folien A und B aus einer Keramik auf Aluminiumoxidbasis und sämtliche leitenden Elemente, d. h. Widerstandsbahnen 10, 20, 30, Zuleitungen 11, 21, 31, Kontakte 12, Durchkontaktierungen 14, Landeplätze 15, 16 auf einer Platin-Aluminiumoxid-Cermet-Paste auszubilden. Weiterhin ist es vorteilhaft, und trägt zu einer möglichst geringen flächenhaften Ausdehnung bei, die Widerstandsbahnen 10, 20, 30 mäanderförmig auszubilden. Der erfindungsgemäße Aufbau und das beanspruchte Herstellungsverfahren eignen sich insbesondere für sehr kompakte PTC-Widerstands-Temperaturfühler im Anwendungsbereich hoher Temperaturen, wie sie in Abgasen von Verbrennungsmotoren auftreten. Neben PTC-Temperaturfühlern können auch NTC (negativer Temperaturcoeffizient) Temperaturfühler unter Ausnutzung der gleichen Vorteile in der erfindungsgemäßen Art hergestellt werden.

### Zeichnung

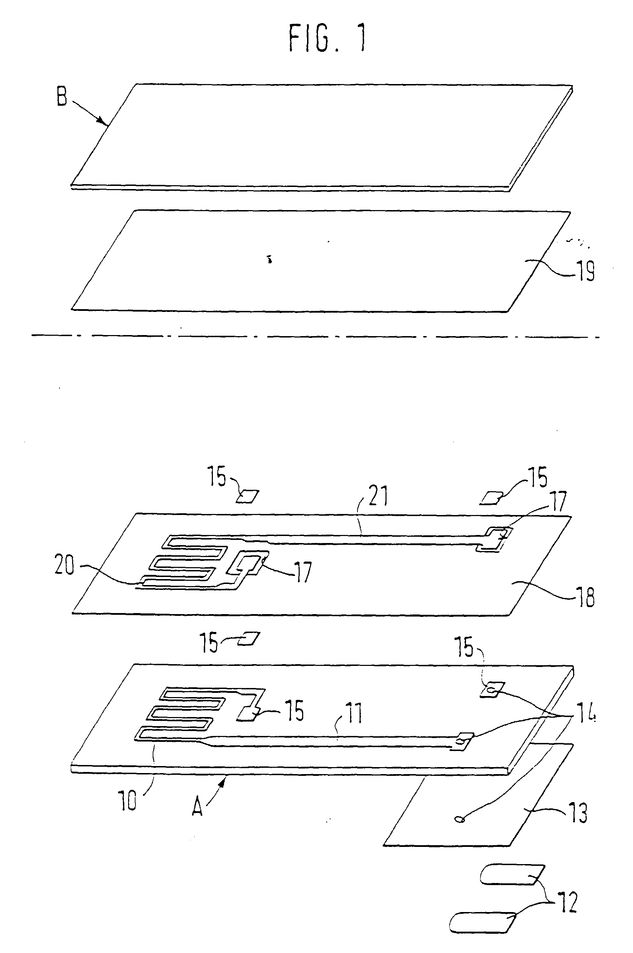

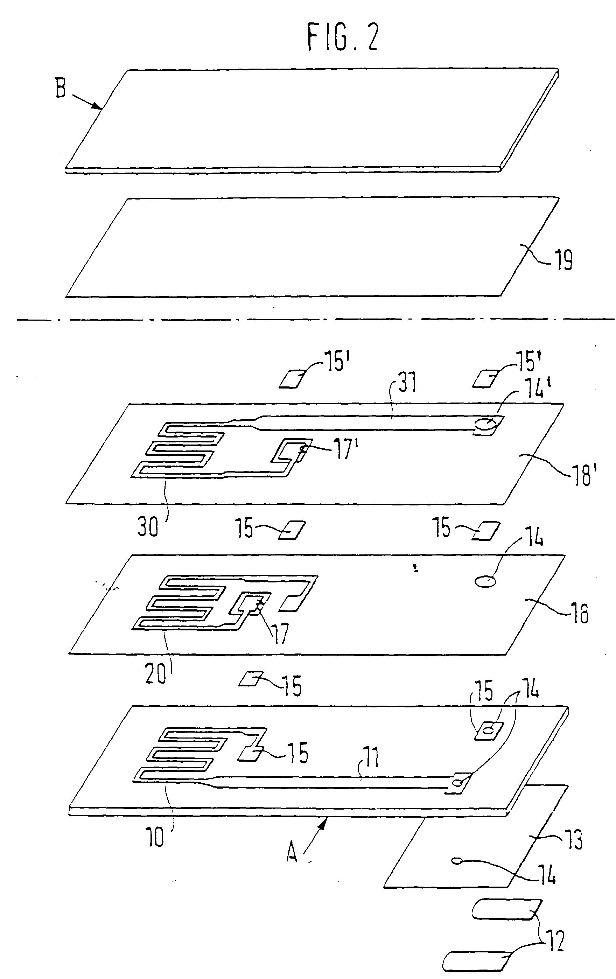

Zwei Ausführungsbeispiele der Erfindung sind in der Zeichnung dargestellt und in der nachfolgenden Beschreibung näher erläutert. Es zeigen
Figur 1 ein erstes Ausführungsbeispiel eines PTC-Temperaturfühlers mit einer Zweifach-Stapel-Anordnung der Widerstandsbahnen und Figur 2 ein zweites Ausführungsbeispiel der Erfindung mit einer Dreifach-Stapel-Anordnung der Widerstandsbahnen.

### Beschreibung der Ausführungsbeispiele

### Beispiel 1

Zur Herstellung einer ersten erfindungsgemäßen Ausführungsform eines PTC-Temperaturfühlerelementes aus zwei Al₂O₃ -Keramikfolien wurde wie in-Figur 1 schematisch dargestellt verfahren. Verwendet wurden zwei Folien einer Stärke von jeweils 0,3 mm. In die Folie A wurden zunächst Durckontaktierungslöcher 14 gestanzt. Zur Erzeugung der Durchkontaktierungen wurde eine Platin/Aluminiumoxid-Paste durch die Löcher gesaugt. Auf die eine Großfläche der Folie A wurde dann eine mäanderförmige Widerstandsbahn 10, eine Zuleitung 11, sowie Landeplätze 15 aus einer Platin/Aluminiumoxid-Cermet-Paste aufgedruckt. Danach wurden auf der gegenüberliegenden Großfläche der Folie A eine Haftvermittlerschicht aus Aluminiumoxid mit erhöhtem Flußmittelanteil unter Freilassung der Durchkontaktierungslöcher der Folie A und danach im Bereich der Durchkontaktierungslöcher Platin/Aluminiumoxid-Kontakte 12 aufgedruckt.

Anschließend wurde auf die mit der Widerstandsbahn 10 bedruckte Großfläche der Folie A, unter Freilassung von Fenstern 17, eine Aluminiumoxid-Isolationsschicht 18 und darauf eine Widerstandsbahn 20, eine Zuleitung 21 sowie gegebenenfalls zusätzliche Landeplätze 15 aufgedruckt. Danach wurde eine Schicht 19 aus interlaminarem Binder auf Aluminiumoxidbasis und zum Schluß eine zweite Aluminiumoxid-Folie B aufgebracht. Der erhaltene Stapel wurde zusammenlaminiert und gesintert, durch etwa 3stündiges Erhitzen auf eine Temperatur von 1600 °C.

Das erhaltene Temperaturfühlerelement wurde in ein nicht dargestelltes Gehäuse des aus der DE-OS 32 06 903 bekannten Typs eingesetzt und zur Temperaturmessung von Abgasen von Verbrennungsmotoren verwendet.

### Beispiel 2

Zur Herstellung eines weiteren erfindungsgemäßen PTC-Temperaturfühlerelementes wurde, wie in Figur 2 schematisch dargestellt, auf die eine Großfläche der Folie A zunächst eine Isolationsschicht 18, unter Freilassung von Fenstern 17 aufgedruckt, die ihrerseits mit einer Widerstandsbahn 20 bedruckt wurde. Anschließend wurde eine zweite Isolationsschicht 18', ebenfalls unter Freilassung von Fenstern 17' auf die erste Isolationsschicht 18 aufgebracht, und wie sie gleichfalls mit einer Widerstandsbahn 30, einer Zuleitung 31, sowie mit zusätzlichen Landeplätzen 15' bedruckt. Auf diese Weise wurde eine Dreifach-Stapel-Anordnung des PTC-Temperaturfühlers erreicht.

Zur Fertigstellung des Temperaturfühlers wurde wie unter Beispiel 1 beschrieben, ein interlaminarer Binder 19 und eine zweite Folie B aufgebracht, der so erhaltene Stapel zusammenlaminiert und gesintert. Das PTC-Temperaturfühlerelement wurde in ein nicht dargestelltes Gehäuse des aus der DE-OS 32 06 903 bekannten Typs eingesetzt und zur Temperaturmessung von Abgasen von Verbrennungsmotoren verwendet.

Die räumliche Konzentration des Meßwiderstandes kann weiter erhöht werden, indem die Anzahl der übereinander angeordneten Widerstandsbahnen mit dazwischengelegten Isolationsschichten weiter erhöht wird. Die Anordnung ist dabei prinzipiell die gleiche wie unter Beispiel 2 (Dreistapel-Anordnung) beschrieben, unter entsprechender Erhöhung der Anzahl der Isolationsschichten 18 mit aufgedruckten Widerstandsbahnen.

Die Stapel-Anordnung von Widerstandsbahnen gemäß der Erfindung ermöglicht somit eine geringe flächenhafte Ausdehnung und dadurch sowohl ausreichend hohe Widerstandsmeßwerte als auch eine weitgehende Unabhängigkeit derselben vom Temperaturgradienten im Abgas.

## Patentansprüche

1. Temperaturfühler, insbesondere PTC-Temperaturfühler, vorzugsweise zur Verwendung in der Abgasanlage von Verbrennungsmotoren, mit einem vorzugsweise in einem Gehäuse angeordneten Fühlerelement mit einer Multilayer-Struktur aus einem Laminatverbund von Keramikfolien (A, B) und einem aus mindestens zwei übereinander angeordneten und elektrisch voneinander isolierten Widerstandsbahnen (10, 20, 30) gebildeten Widerstand, insbesondere PTC-Widerstand, wobei eine erste Widerstandsbahn (10) mit einer Zuleitung (11) auf eine Isolatorkeramik-Basisfolie (A) aufgedruckt ist und jede weitere Widerstandsbahn (10, 20, 30) von der benachbarten Widerstandsbahn (10) durch mindestens jeweils eine Isolationsschicht (18, 18') getrennt ist , dadurch gekennzeichnet, daß die Isolationsschicht (18, 18') eine gedruckte Schicht ist, daß die weitere Widerstandsbahn (20) bzw. die weiteren Widerstandsbahnen (20, 30) auf die jeweils vorhandene Isolationsschicht (18, 18') aufgedruckt ist bzw. sind, so daß die Isolationsschicht(en) (18, 18') und die Widerstandsbahnen (10, 20, 30) ein auf der Basisfolie (A) angeordnetes Schichtsystem ergeben, daß in der gedruckten Isolationsschicht (18, 18') jeweils Fenster (17) ausgespart sind, durch die die Widerstandsbahnen (10, 20, 30) miteinander kontaktiert sind, und daß die weitere Folie (B) als Deckfolie auf die mit dem Schichtsystem versehene Basisfolie (A) laminiert ist, so daß die Widerstandsbahnen (10, 20, 30) durch den Laminatverbund hermetisch gegenüber dem Meßgas und der Umgebungsluft abgekapselt sind.

2. Temperaturfühler nach Anspruch 1, dadurch gekennzeichnet, daß die Widerstandsbahnen (10,20,30) mäanderförmig ausgebildet sind.

3. Temperaturfühler nach Anspruch 1, dadurch gekennzeichnet, daß die Keramikfolien (A, B) sowie die Isolationsschichten (18) auf Al₂O₃ -Basis aufgebaut sind.

4. Temperaturfühler nach Anspruch 1, dadurch gekennzeichnet, daß die zuletzt aufgebrachte Isolationsschicht (18) mit der Abdeckfolie (B) mittels eines interlaminaren Binders zusammenlaminiert ist.

5. Temperaturfühler nach einem der vorhergehenden Ansprüche, dadurch gekennzeichnet, daß die Widerstandsbahn (10, 20, 30) und die Zuleitung aus einer Cermetpaste gebildet sind.

6. Temperaturfühler nach Anspruch 5, dadurch gekennzeichnet, daß die Cermetpaste eine Platin-Aluminiumoxid-Paste ist.

7. Verfahren zur Herstellung eines Temperaturfühlers nach einem der vorhergehenden Ansprüche, dadurch gekennzeichnet, daß man in eine erste Keramikfolie (A) Durchkontaktierungslöcher (14) stanzt, Durchkontaktierungen erzeugt, auf eine Großfläche der Folie (A) eine Widerstandsbahn (10), eine Zuleitung (11) sowie Landeplätze (15) und auf die gegenüberliegende Großfläche der Folie (A), gegebenenfalls nach Äufbringen einer Haftvermittlerschicht (13), Kontakte (12) aufdruckt, daß man anschließend auf die mit der Widerstandsbahn (10) bedruckte Großfläche der Folie (A) mindestens eine Isolationsschicht (18), unter Freilassung von Fenstern (17) aufdruckt, und auf der Isolationsschicht (18) weitere Widerstandsbahn(en) (20, 30) und Isolationsschichten aufdruckt, so daß die Isolationsschicht(en) (18,18') und die Widerstandsbahnen (10,20,30) ein auf der Basisfolie (A) angeordnetes Schichtensystem ergeben und die von der Folie (A) am weitesten entfernte Isolationsschicht (18) mit einer Zuleitung (21, 31) bedruckt, gegebenenfalls einen Haftvermittler (19) aufbringt und anschließend mit einer zweiten Folie (B) zusammenlaminiert und sintert, dergestalt, daß eine Stapel-Anordnung des Widerstandes vorliegt.

## Claims

1. Temperature sensor, particularly a PTC temperature sensor, preferably for use in the exhaust-gas system of internal-combustion engines, having a sensor element which is preferably arranged in a housing and has a multilayer structure consisting of a laminate composite of ceramic films (A, B) and a resistor, particularly a PCT thermistor, which is formed by at least two resistor tracks (10, 20, 30) arranged one above the other and electrically insulated from one another, a first resistor track (10) having a supply lead (11) being printed onto an insulating ceramic base film (A), and each further resistor track (10, 20, 30) being separated from the adjacent resistor track (10) by at least one insulation layer (18, 18') in each case, characterised in that the insulation layer (18, 18') is a printed layer, in that the further resistor track (20) or the further resistor tracks (20, 30) is or are printed on the insulation layer (18, 18') present in each case, with the result that the insulation layer(s) (18, 18') and the resistor tracks (10, 20, 30) produce a layer system arranged on the base film (A), in that windows (17) are in each case cut out in the printed insulation layer (18, 18'), through which windows the resistor tracks (10, 20, 30) are in contact with one another, and in that the further film (B) is laminated as a covering film onto the base film (A) provided with the layer system, with the result that the resistor tracks (10, 20, 30) are hermetically encapsulated by the laminate composite with respect to the gas being measured and the environmental air.

2. Temperature sensor according to Claim 1 characterised in that the resistor tracks (10, 20, 30) are constructed in a meandering shape.

3. Temperature sensor according to Claim 1, characterised in that the ceramic films (A, B) and the insulation layers (18) are constructed on an Al₂O₃ base.

4. Temperature sensor according to Claim 1, characterised in that the insulation layer (18) applied last is laminated together with the covering film (B) by means of an interlaminar binder.

5. Temperature sensor according to one of the preceding claims, characterised in that the resistor track (10, 20, 30) and the supply lead are formed from a cermet paste.

6. Temperature sensor according to Claim 5, characterised in that the cermet paste is a platinum/aluminiumoxide paste.

7. Method for producing a temperature sensor according to one of the preceding claims, characterised in that holes (14) for through-plating are stamped in a first ceramic film (A), through-plated holes are produced, a resistor track (10), a supply lead (11) and lands (15) are printed on one large surface of the film (A), and contacts (12) are printed on the opposite large surface of the film (A), if necessary after application of a bonding agent layer (13), and in that at least one insulation layer (18) is subsequently printed on the large surface of the film (A) on which the resistor track (10) is printed, leaving windows (17) exposed, and further resistor tracks (20, 30) and insulation layers are printed on the insulation layer (18), with the result that the insulation layer(s) (18, 18') and the resistor tracks (10, 20, 30) produce a layer system arranged on the base film (A), and a supply lead (21, 31) is printed on the insulation layer (18) furthest away from the film (A), a bonding agent (19) is applied if necessary, and said items are subsequently laminated together and sintered with a second film (B) such that a stack arrangement of the resistor is produced.

## Revendications

1. Capteur de température notamment capteur de température PTC destiné de préférence à des installations de gaz d'échappement de moteurs à combustion interne comprenant un élément de capteur logé de préférence dans un boîtier et ayant une structure multicouche formée d'une combinaison laminée de feuilles de matière céramique (A, B) et d'au moins une résistance formée par deux chemins résistants (10, 20, 30) superposés et isolés électriquement les uns des autres notamment d'une résistance PTC, un premier chemin résistant (10) étant imprimé avec une ligne d'alimentation (11) sur une feuille de base de céramique isolante (A) et chaque autre chemin résistant (10, 20, 30) est séparé du chemin résistant voisin (10) par au moins une couche d'isolation (18, 18') respective,
caractérisé en ce que
la couche d'isolation (18, 18') est une couche imprimée,
l'autre chemin résistant (20) ou les autres chemins résistants (20, 30) sont imprimés sur la couche d'isolation (18, 18') existante, de sorte que la ou les couches d'isolation (18, 18') et les chemins résistants (10, 20, 30) donnent un système à couche sur une feuille de base (A),
dans la couche d'isolation, imprimée (18, 18'), on a réservé chaque fois une fenêtre (17) à travers laquelle les chemins résistants (10, 20, 30) sont mis en contact et,
l'autre feuille (B) est laminée comme feuille de recouvrement sur la feuille de base (A) munie du système à couches, de sorte que les chemins résistants (10, 20, 30) soient encapsulés hermétiquement par la combinaison laminée, vis-à-vis du gaz de mesure et de l'air ambiant.

2. Capteur de température selon la revendication 1,
caractérisé en ce que
les chemins résistants (10, 20, 30) sont en forme de méandres.

3. Capteur de température selon la revendication 1,
caractérisé en ce que
les feuilles de céramique (A, B) ainsi que les couches d'isolation (18) sont réalisées à base de Al₂O₃.

4. Capteur de température selon la revendication 1,
caractérisé en ce que
la couche d'isolation (18) appliquée en dernier lieu est combinée par laminage avec la feuille de recouvrement (B) à l'aide d'un liant interlaminaire.

5. Capteur de température selon l'une des revendications précédentes,
caractérisé en ce que
le chemin résistant (10, 20, 30) et la ligne d'alimentation sont formés d'une pâte Cermet.

6. Capteur de température selon la revendication 5,
caractérisé en ce que
la pâte Cermet est une pâte platine/oxyde d'aluminium.

7. Procédé de fabrication d'un capteur de température selon l'une quelconque des revendications précédentes,
caractérisé en ce qu'
on matrice une première feuille de céramique (A) pour obtenir des orifices de contacts traversants (14), on forme les contacts traversants, on applique sur une face de la feuille (A), un chemin résistant (10), une ligne d'alimentation (11) ainsi que des emplacements d'arrivée (15) et sur la face opposée de la feuille (A), le cas échéant après application d'une couche de liant (13), des contacts (12), puis on imprime sur la face de la feuille (A) imprimée avec le chemin résistant (10), au moins une couche d'isolation (18) en laissant libres des fenêtres (17) et sur la couche d'isolation (18), on imprime d'autres chemins résistants (20, 30) et des couches d'isolation pour que les couches d'isolation (18, 18') et les chemins résistants (10, 20, 30) donnent un système stratifié appliqué sur la feuille de base (A), et la couche d'isolation (18) la plus éloignée de la feuille (A), reçoit en impression une ligne d'alimentation (21, 31) le cas échéant appliquée par un agent adhésif (19), puis on lamine à une seconde feuille (B) et on fritte,
on dispose alors d'une disposition en pile pour la résistance interne.
